# EUROPÄISCHE PATENTANMELDUNG

(11) **EP 1 155 954 A2**
(43) Veröffentlichungstag der Anmeldung: **21.11.2001**
(21) Anmeldenummer: 01810475.2
(22) Anmeldetag: 15.05.2001
(51) Int. Cl.: B62M 23/02, H02K 7/18, H02K 41/03

(54) **Stromerzeugungs- und/oder Antriebsvorrichtung**

(30) Priorität: 16.05.2000 CH 9652000
(71) Anmelder: Kläui, Werner, 8575 Bürglen (CH)
(72) Erfinder: Kläui, Werner, 8575 Bürglen (CH)
(74) Vertreter: Patentanwälte Breiter + Wiedmer AG

(57) **Zusammenfassung**

Eine elektrische Vorrichtung, insbesondere an einem Fahrzeug, umfasst wenigstens ein mit Permanentmagneten (12,14) und/oder elektrischen Wickelspulen (30) bestücktes Rad (10) als Rotor und auf wenigstens einer Trägereinheit (22) angeordnete elektrische Wickelspulen (30) und/oder Permanentmagneten (12,14) als Stator. Die Permanentmagneten (12,14) und die Wickelspulen (30) sind bei entsprechender Stellung des Rotors paarweise deckungsgleich angeordnet. In einer Vorrichtung zur direkten Stromerzeugung und/oder zum Direktantrieb sind die Permanentmagneten (12,14) und/oder Wickelspulen (30) entlang einer oder beider im peripheren Bereich ringförmig ausgebildeten Seitenfläche/n (11) wenigstens eines Rades (10) angeordnet. In Abstand zu dieser/diesen Seitenfläche/n (11) ist/sind je eine Trägereinheit (22) aus einer Trägerplatte (28) mit wenigstens drei dem Krümmungsradius (K) der Seitenfläche (11) des Rades (10) entsprechend längslaufend nebeneinander angeordneten Wickelspulen (30) und/oder Permanentmagneten (12,14) eingebaut. Bei einer kombinierten elektrischen Stromerzeugungs- und Antriebsvorrichtung ist eine Umschaltung vorgesehen. Die Vorrichtung wird bevorzugt für vollständig oder ergänzend durch menschliche Muskelkraft, Gravitations- und/oder Bremskraft angetriebene Fahrzeuge und Apparate verwendet.

## Beschreibung

Die Erfindung betrifft eine elektrische Vorrichtung, insbesondere an einem Fahrzeug, welche wenigstens ein mit Permanentmagneten und/oder elektrischen Wickelspulen bestücktes Rad als Rotor und auf wenigstens einer Trägereinheit angeordnete elektrische Wickelspulen und/oder Permanentmagneten als Stator umfasst, wobei die Permanentmagneten und die Wickelspulen bei entsprechender Stellung des Rotors paarweise deckungsgleich angeordnet sind. Weiter betrifft die Erfindung Verwendungen der Vorrichtung.

Es ist bekannt, dass die Stromerzeugung auf nichtchemischem Weg über Permanent- bzw. Dauermagnete und Wickelspulen, insbesondere mit Kupferdrähten, erfolgt. Dieses Prinzip wird beispielsweise bei den herkömmlichen Dynamos für Fahrräder verwendet. Dynamos haben jedoch einen schlechten Wirkungsgrad, speziell bei Schmutz, Wasser und Schnee wird die mechanische Kraftübertragung durch Schlupf erheblich beeinträchtigt, mit andern Worten gleitet der Dynamo wenigstens zeitweise auf dem Pneu.

Trotz zahlreicher Versuche, die Stromversorgung von Fahrzeugen, insbesondere von Fahrrädern, auf einfachere, sicherere und wirkungsvollere Art und Weise zu erreichen, hat sich bisher in der Praxis kein anderes, dem Praktiker bekanntes System nachhaltig durchsetzen können. Mit dem Begriff "Fahrzeug" werden hier und im Folgenden alle auch wenigstens teilweise durch menschliche Körperkraft angetriebenen, sowie die Gravitations- und/oder Bremskraft ausnutzenden Fahrzeuge mit wenigstens einem Rad umfasst, auch Elektrofahrzeuge.

Bei wenigstens teilweise mit elektrischem Strom betriebenen Fahrzeugen sind Batterien bzw. Akkumulatoren angeordnet, welche nachts am Netz aufgeladen werden. Die unbefriedigende Reichweite dieser Fahrzeuge kann wohl durch ergänzende Anwendung von menschlicher Körperkraft etwas erhöht werden, insgesamt bleibt sie jedoch unbefriedigend.

Der Erfinder hat sich deshalb die Aufgabe gestellt, eine elektrische Stromerzeugungs- und/oder Antriebsvorrichtung der eingangs genannten Art zu schaffen, welche elektrischen Strom in optimaler Weise erzeugt und diesen speichert und/oder diesen mit hohem Wirkungsgrad abgeben kann.

Bezüglich der Vorrichtung wird die Aufgabe erfindungsgemäss dadurch gelöst, dass in einer Vorrichtung, zur direkten Stromerzeugung und/oder zum Direktantrieb, Permanentmagneten und/oder Wickelspulen entlang einer oder beider im peripheren Bereich ringförmig ausgebildeten Seitenfläche/n wenigstens eines Rades angeordnet sind, und in Abstand zu dieser/n Seitenfläche/n je eine Trägereinheit aus einer Trägerplatte mit wenigstens drei dem Krümmungsradius der Seitenfläche des Rades entsprechend längslaufend nebeneinander angeordneten Wickelspulen und/oder Permanentmagneten eingebaut ist/sind, wobei bei einer kombinierten elektrischen Stromerzeugungs- und Antriebsvorrichtung eine Umschaltung vorgesehen ist. Spezielle und weiterbildende Ausführungsformen der Vorrichtung sind Gegenstand von abhängigen Ansprüchen.

In bezug auf die konstruktive Gestaltung von Details der Vorrichtung wird ausdrücklich auf die internationale Patentanmeldung WO 00/59769 verwiesen. Alle als Bremssystem dargestellte Varianten können auch als elektrische Stromerzeugungs- und/oder Antriebsvorrichtung mit einem eine oder zwei Seitenflächen aufweisenden Rad und je einer Trägereinheit aus einer Trägerplatte sein, wobei die Trägereinheit/en jedoch in einem festen oder einstellbaren Abstand von der betreffenden Seitenfläche montiert ist/sind. Ebenso fehlen alle ausserhalb des Radlagers eine mechanische Reibung erzeugenden Komponenten, falls es sich nicht um ein Bremssystem handelt. Mit andern Worten kann die vorliegende Erfindung nach einer Variante als kombinierte Brems, Stromerzeugungs- und/oder Antriebsvorrichtung ausgebildet sein, muss dies jedoch nicht.

Die erfindungsgemässe Vorrichtung kann grundsätzlich als
- elektrische Stromerzeugungsvorrichtung, oder
- elektrische Antriebsvorrichtung, oder
- kombinierte elektrische Stromerzeugungs- und Antriebsvorrichtung mit einer an sich bekannten, manuell betätigbaren oder elektronisch gesteuerten Umschaltung
ausgebildet sein.

Dient die Vorrichtung in kurzen Zeitabständen sowohl der Stromerzeugung als auch dem Antrieb, muss diese einfach von der einen Variante zur andern umschaltbar sein. Grundsätzlich kann die Umschaltung manuell erfolgen, mit direkter oder indirekter Auslösung. Weiter kann die Umschaltung elektronisch gesteuert werden, indem beim Erreichen eines vorgegebenen Wertes ein Aktuator betätigt wird, beispielsweise beim Erreichen einer bestimmten Geschwindigkeit und/oder beim Erreichen eines bestimmtes Aufwandes an menschlicher Muskelkraft.

Die Permanentmagneten sind unmittelbar oder in Abstand nebeneinander liegend, mit alternierender oder gleicher Polarität, angeordnet. Zwischen in Abstand voneinander angeordneten Permanentmagneten kann eine magnetisch gut leitende Zwischenschicht liegen, insbesondere aus Weicheisen.

Wickelspulen sind zweckmässig nach dem U-KERN-PRINZIP nebeneinander angeordnet, wie dies in Fig. 6 und 7 der erwähnten WO 00/59769 dargestellt und auf deren Seite 12 beschrieben wird. Der Magnetfluss führt von einem Permanentmagneten über Spulenkerne auf eine Trägerplatte. Dort teilt sich der Magnetfluss in zwei Hälften auf und fliesst etwa hälftig in diametral entgegengesetzter Richtung bis zum nächsten Spulenkern. Dort vereinigen sich die aus verschiedener Richtung kommenden Magnetflüsse und fliessen über die anderen Spulenkerne zu einem benachbarten Permanentmagneten. Falls die Spulenkerne magnetisch nicht leitend sind, erfolgt der Magnetfluss durch die Wickelspulen.

Sind die Wickelspulen auf wenigstens einer peripheren Seitenflächen des Rades angeordnet, ist die Stromführung zum Verbraucher oder zur Batterie in der Regel komplizierter als bei auf dem Stator angeordneten Spulen. Der erzeugte elektrische Strom fliesst über Radspeichen oder andere radiale Leiter zu beiden Stirnseiten der Radnabe, welche eine Isolation mit wenigstens einem die linke und die rechte Seite der Radnabe elektrisch trennenden Isolationsring aufweist. Auch diesbezüglich wird auf die bereits erwähnte WO 00/59769, Fig. 27 und die entsprechende Beschreibung auf Seite 19 verwiesen.

In der Regel sind die Permanentmagneten und/oder Wickelspulen regelmässig über den ganzen Radumfang verteilt. Für eine Antriebsvorrichtung ist diese Anordnung erforderlich. Bei einer Stromerzeugungsvorrichtung sind vorzugsweise wenigstens 20 % des Umfangs der Seitenfläche eines Rades mit Permanentmagneten und/oder Spulen bestückt, insbesondere wenigstens 75 %.

Ist die periphere Seitenfläche eines Rades mit Wickelspulen bestückt, so sind auf der Trägerplatte in entsprechender Position Permanentmagneten aufgebracht. Nach einer speziellen Ausführungsform können Permanentmagneten einzeln oder gruppenweise durch Wickelspulen ersetzt werden. Mit diesen für eine Stromerzeugungsvorrichtung geeigneten Varianten kann der erzeugte elektrische Strom vom Stator abgeführt werden, bei der ausschliesslichen Anordnung von Dauermagneten auf der Trägerheit muss der elektrische Strom, wie vorstehend erwähnt, über den Rotor zum Verbrauer oder zur Batterie geleitet werden, was mit zusätzlichem Aufwand verbunden ist.

Die Vorteile der erfindungsgemässen Erfindung können wie folgt zusammengefasst werden:
- Laufende Stromerzeugung im peripheren Bereiche eines Rades ohne mechanische Reibung ausserhalb des Radlagers.
- Elektrische Antriebsvorrichtung, welche direkt am Radumfang angreift, kein oder kein ausschliesslicher Achsantrieb,
- Einfache Umschaltung von elektrischer Stromerzeugung zum elektrischen Antrieb.

Die Verwendung einer erfindungsgemässen Vorrichtung liegt schwergewichtig auf dem Gebiet von vollständig oder ergänzend durch menschliche Muskelkraft angetriebenen Fahrzeugen und Apparaten. Als Beispiele seien Fahrräder, auch Elektrofahrräder, auf dem Fahrradprinzip basierende Hometrainer, Inline-Skatingrollen, Skater-Sticks und Skate-Boardrollen (Rollbrettrollen) genannt. Der dabei erzeugte elektrische Strom dient insbesondere der Beleuchtung, Speisung von Computern und indirekt einem menschliche Muskelkraft unterstützenden Antrieb. Eine Antriebsvorrichtung wird von elektrischem Strom gespeist, welcher vorgängig kontinuierlich in einer Batterie oder einem Akkumulator gespeichert wurde.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 eine aufgeschnittene Ansicht einer elektrischen Stromerzeugungs- und/oder Antriebsvorrichtung,
- Fig. 2 eine aufgeschnittene Ansicht einer Inline-Skatingrolle,
- Fig. 3 eine Ansicht eines Elektrofahrrades,
- Fig. 3a eine Ansicht eines Elektrotrottinets,
- Fig. 4 eine Teilansicht des peripheren Bereichs eines Rades,
- Fig. 5 einen Schnitt V-V gemäss Fig. 1,
- Fig. 6 eine Variante gemäss Fig. 4,
- Fig. 7 eine Variante von Fig. 5,
- Fig. 8 eine Variante gemäss Fig. 4 mit Spulen, und
- Fig. 9 eine Variante von Fig. 5 mit Permanentmagneten.

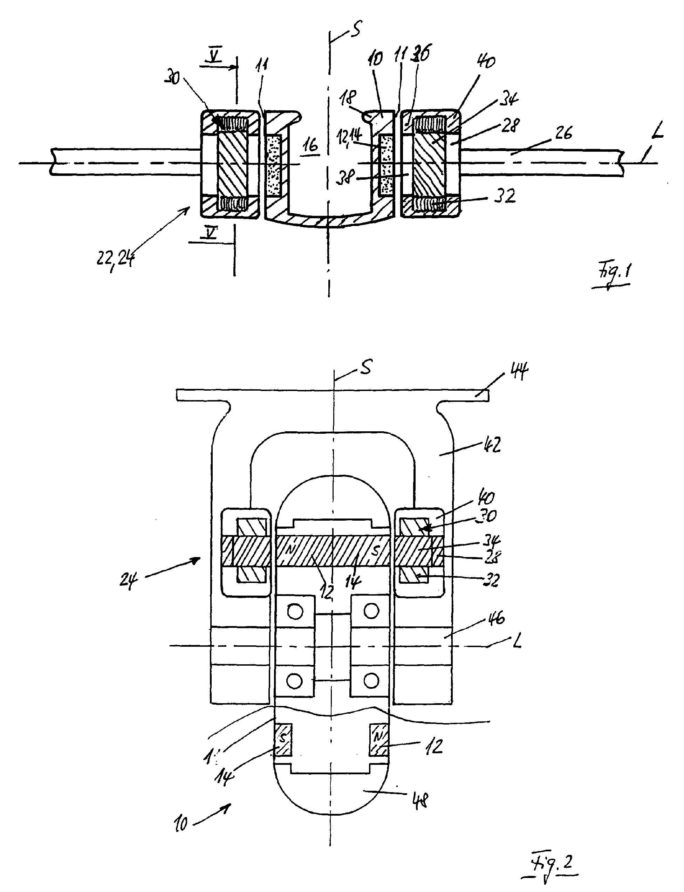

Fig. 1 zeigt den Kern einer elektrischen Stromerzeugung- und/oder Antriebsvorrichtung, welche eine Symetrieebene S hat. Ein Rad 10, im vorliegenden Fall als Aluminiumfelge eines Fahrrades ausgebildet, ist im Querschnitt dargestellt. Zwei periphere Seitenflächen 11 des Rades 10 haben je eine umlaufende Nut, in welche nachfolgend im Detail gezeigte Permanentmagnetschichten 12,14 in Plättchenform eingeklebt sind. Die Permanentmagnetschichten 12,14 bestehen aus magnetischem oder magnetisierbarem Material. Ein Innenraum 16 des Rades 10 dient der Aufnahme von nicht dargestellten Pneuwulsten, welche nach dem Aufpumpen eines ebenfalls nicht dargestellten Pneus durch eine Verhakung 18 in Form von Rastnasen arretiert werden.

In einem geringen Abstand von wenigen Millimetern von den peripheren Seitenflächen 11 entfernt sind beidseits Spuleneinheiten 24 angeordnet, welche in Längsrichtung L über deren Träger 26 einstellbar befestigt sind.

Die Spuleneinheiten 24 umfassen im wesentlichen eine magnetisch gut leitende Trägerplatte 28, wenigstens drei Wickelspulen 30 mit Kupferdrähten 32 und wenigstens einen Spulenkern 34.

In Richtung des Rades bzw. der Permanetmagnetschichten 12,14 verläuft ein Spulenschutz 40 mit einer magnetisch gut leitenden Übertragungsplatte 38 im Bereich des Spulenkerns 34 und allenfalls der Spulen 30. Dadurch ist die Spuleneinheit 24 wasserdicht umhüllt.

Die elektrische Stromerzeugung- und/oder Antriebsvorrichtung gemäss Fig. 1 kann auch als Bremssystem ausgebildet sein, wenn die Spuleneinheit 24 über deren Trägereinheit 22 auf die periphere Seitenfläche drückbar ist. Selbstverständlich muss in diesem Fall das betreffende Material auch abriebfest ausgebildet sein.

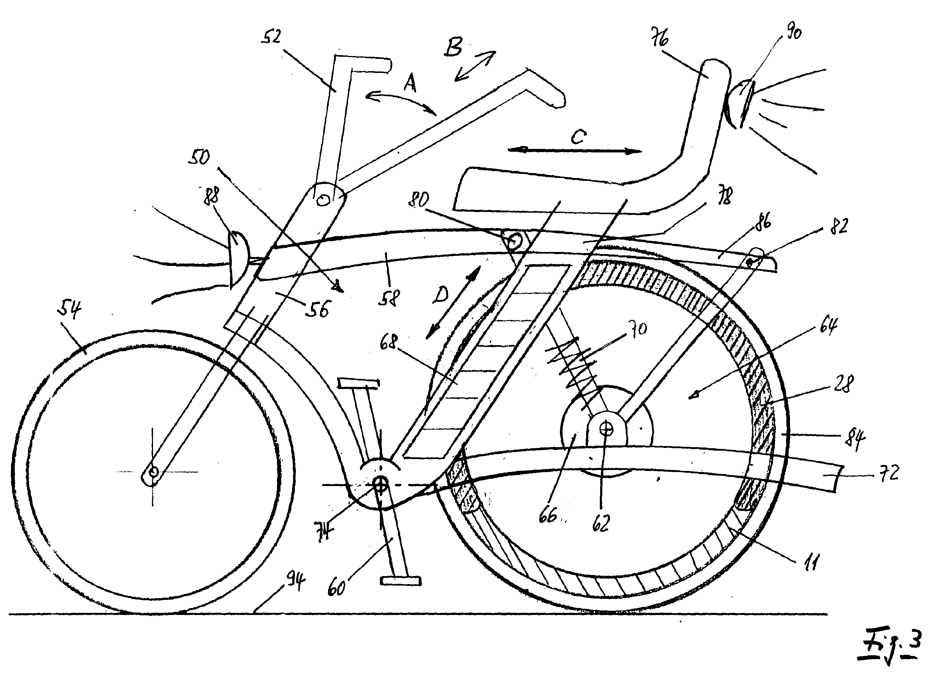

In Fig. 2 ist ein Rad 10, eine Inline-Skatingrolle, mit dem entsprechenden Radgehäuse 42, welches über zwei Flansche 44 an einem nicht dargestellten, an sich bekannten Spezialschuh befestigt ist. Das Radgehäuse 42 ist im wesentlichen U-förmig ausgebildet, die Radachse 46 ist in den parallelen Schenkeln gelagert. Das Rad 10 selbst weist eine ringförmige Gummibeschichtung 48 auf.

Nach der in der oberen Radhälfte dargestellten Variante sind die Permanentmagnetschichten 12,14 als Bolzen ausgebildet, welche entsprechende Bohrungen im Rad 10 vollständig durchgreifen. Bei der in der unteren Radhälfte dargestellten Variante sind die Permanentmagnetschichten 12,14 in entsprechenden Aussparungen des Radprofils befestigt.

Sowohl bei der Ausführungsform nach Fig. 1 als auch nach Fig. 2 wird beim Drehen des Rades 10 durch die Permanentmagneten 12,14 in den Kupferdrähten 32 der Wickelspulen 30 elektrischer Strom induziert, welcher über die den Stator bildenden Spuleneinheiten 24 und die Trägerplatte 28 problemlos abgeführt und einem Verbraucher zugeleitet oder gespeichert werden.

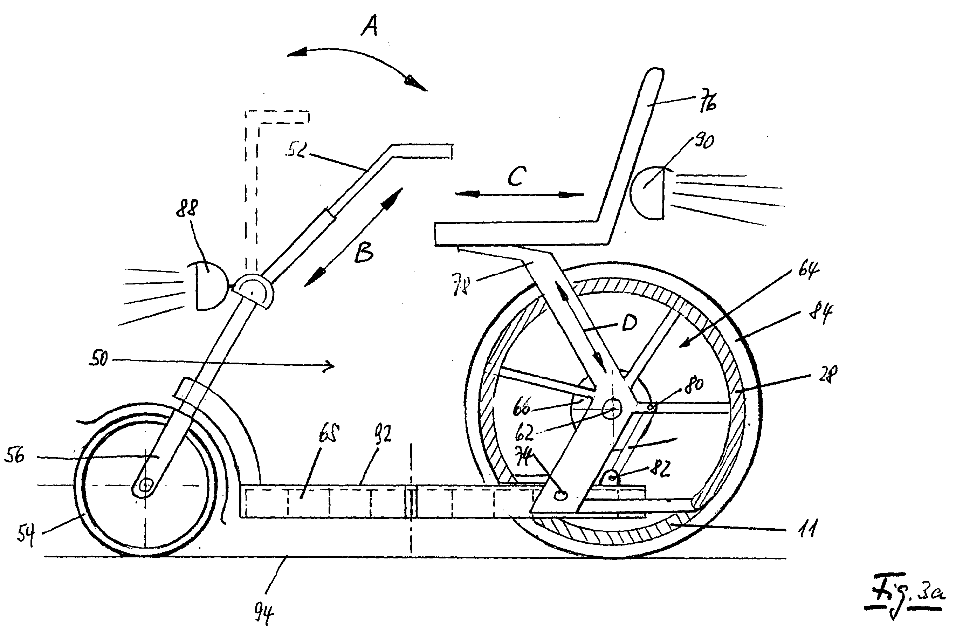

Ein in Fig. 3 dargestelltes Elektrofahrrad 50 lässt sowohl bezüglich des Designs als auch des Konzepts eine übliche Grundform erkennen.

Eine gemäss Doppelpfeil A schwenkbare und gemäss Doppelpfeil B ausziehbare Lenkstange 52 und ein in einer Teleskopgabel 56 gelagertes Vorderrad 54 sind übliche Fahrradbestandteile. In einem im wesentlichen dreieckförmig ausgebildeten Fahrradrahmen 58 ist in ebenfalls üblicher Weise ein Tretlager mit Pedalen 60 angeordnet. Die üblich ausgebildete Kraftübertragung vom Tretlager zu einem Hinterrad 64 ist übersichtshalber nicht eingezeichnet, die Tretkraft ergänzt einen auf die Achse 62 des Hinterrades 64 einwirkenden Nabenmotor 66. Dieser Nabenmotor 66 wird von einem im Fahrradrahmen 58 eingebauten Akkumulator 68 gespeist. Ein Stossdämpfer 70 federt eine Hinterradgabel 72, welche um die Tretlagerachse 74 schwenkbar ist. Ein Sattel 76 ist über eine Sattelbefestigung 78 verstellbar am Fahrradrahmen 58 befestigt. Der Sattel ist in Richtung der Doppelpfeile C und D verstellbar. Die Federung der Hinterradachse 62 wird durch weitere Schwenkachsen 80,82 ermöglicht.

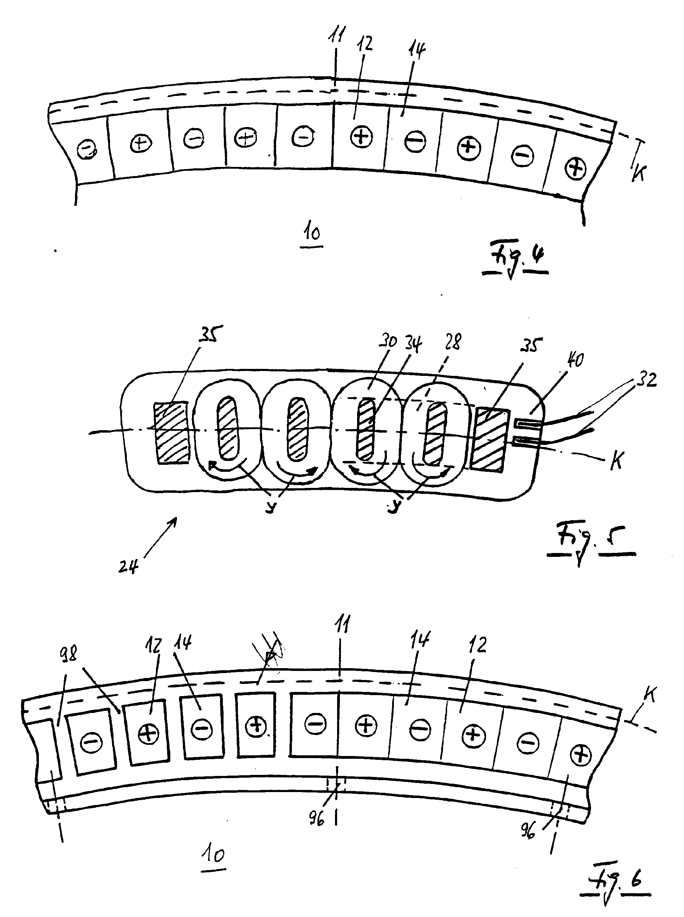

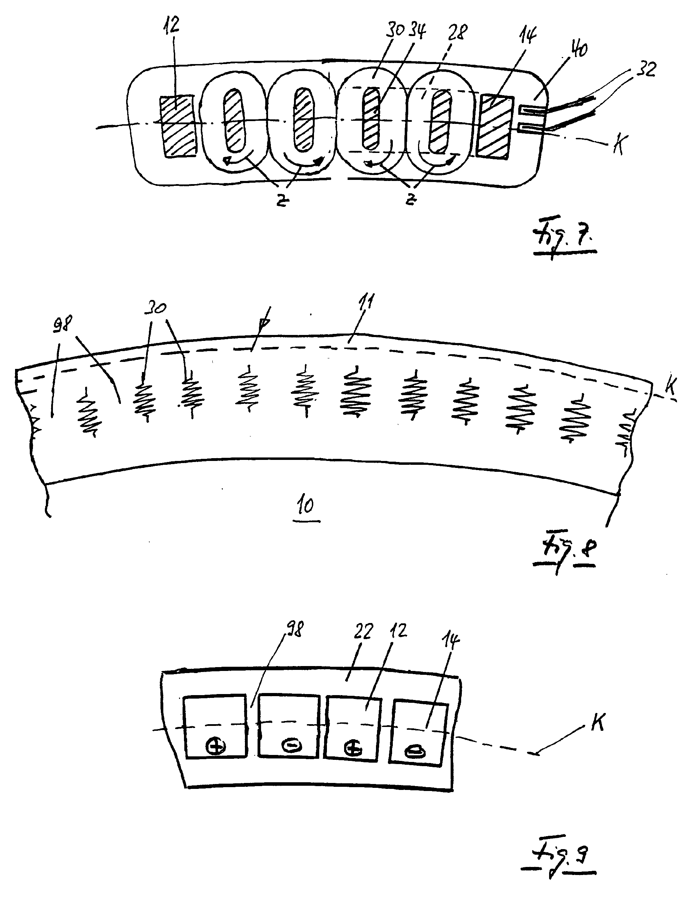

Das für die vorliegende Erfindung wesentliche Hinterrad 84 weist eine Felge mit zwei peripheren Seitenflächen 11 auf und ist mit einem Pneu 84 bestückt. Diese Seitenflächen 11 sind mit Permanentmagnetschichten 12,14 bestückt, wie in den folgenden Figuren 4, 6 gezeigt wird. Über etwa zwei Drittel des Radumfangs wird dieser Magnetring von der Trägerplatte 28 mit nicht dargestellten Magnetspulen überdeckt. Dieser Bereich entspricht etwa dem Bereich eines nicht dargestellten Schutzblechs.

Die Anordnung des Akkumulators 68 im Fahrradrahmen 58 ist nicht zwingend, dieser könnte auch auf dem Packträger 86 gehaltert sein.

Für den Betrieb des Elektrofahrrads ergeben sich folgende Möglichkeiten:
- Der Fahrer fährt ausschliesslich mit Muskelkraft, was bei ebenen oder abschüssigen Strecken ohne weiteres möglich ist. Durch die Muskelarbeit und/oder Gravitationskraft wird der Akkumulator 68 laufend aufgeladen und/oder eine Vorder- 88 und eine Rückleuchte 90 sind als Verbraucher eingeschaltet.
- Das Elektrofahrrad 50 wird ausschliesslich durch den Nabenmotor angetrieben. Der Fahrer ist in Ruheposition, der Akkumulator 68 entleert sich kontinuierlich, bei eingeschalteter Beleuchtung noch schneller. Die erfindungsgemässe Kombination Magnetring mit Permanentmagnetschichten 12,14-Trägerplatte 28 mit Wickelspulen 30 erzeugt auch in diesem Fall elektrischen Strom, sofern dies erwünscht und sinnvoll ist.
- Der Nabenmotor 66 ist eingeschaltet, die erfindungsgemässe Kombination Magnetring mit Permanentmagnetschichten 12,14 - Trägerplatte 28 mit Wickelspulen 30 ist auf Antrieb geschaltet. Auch im vorliegenden Fall wird der Akkumulator 68 entladen, jedoch dank der Direktübertragung im peripheren Bereich des Rades mit äusserst wirkungsvoller Leistungsabgabe.
- Das Elektrofahrrad 50 wird durch Muskelkraft und eingeschaltetem Nabenmotor 66 angetrieben. Je nach dem Anteil des Fahrers an der Gesamtleistung wird der Akkumulator 68 langsam entladen, verharrt etwa im Gleichgewicht, oder wird weiter aufgeladen.

Mit dem Elektrofahrrad 50 gemäss vorliegender Ausführungsform wird der Benutzerkomfort deutliche erhöht, auch wird der Wirkungsbereich des Elektrofahrrads ohne Nachtaufladung wesentlich erweitert.

Ein in Fig. 3a gezeigtes Elektrotrottinet 50 fällt ebenfalls unter die Kategorie Fahrräder. Im wesentlichen entspricht das Elektrotrottinet dem Elektrofahrrad gemäss Fig. 3. Bezüglich der Erfindung sind keine grundsätzlichen Unterschiede zwischen der Fig. 3 und 3a auszumachen.

Bezüglich des Designs und des Konzepts fällt jedoch sofort auf, dass das Elektrotrottinet ein wesentlich kleineres Vorderrad und keinen Fahrradrahmen hat, jedoch ein Trittbrett 92 mit den darunter gelagerten Akkumulatoren 68. Die menschliche Antriebskraft wird nicht in ein Kurbelsystem, sondern durch Abstossen vom Boden 94 direkt ausgeübt.

In Fig. 4 ist ein Segment einer Seitenfläche 11 eines Rades 10 dargestellt. In einer umlaufenden Nut des Rades 10 sind alternierend angeordnete Permanentmagnetschichten 12,14 entsprechend der Polarisation mit + und - bezeichnet. Die Permanentmagnetschichten 12 oder 14 können auch gleichpolig ausgebildet sein.

In Fig. 5 ist eine als Spuleneinheit 24 ausgebildete Trägereinheit dargestellt. Die Wickelspulen 30 mit den Spulenkernen 34 sind eng aneinander liegend praktisch linear angeordnet. Die Krümmungslinie K entspricht derjenigen des Rades 10 gemäss Fig. 4. Die beiden endständigen Spulenkerne haben keine Spulenwicklung, sie werden deshalb Abschlusskerne 35 genannt. Die Wickelrichtung der Wickelspulen 30 aus isolierten Kupferdrähten 32 ist mit y angegeben, sie sind bezüglich einer oder beider Nachbarspulen gegenläufig, also alternierend. Die aus der Spuleneinheit 24 austretenden Kupferdrähte 32 führen zu einem nicht dargestellten Stromverbraucher (88, 90 in Fig. 3 und 3a) und/oder zu einem Akkumulator 68 (Fig. 3 und 3a).

In Fig. 6 ist, ähnlich wie in Fig. 4 der periphere Teil eines Rades 10 dargestellt. In Fig. 6 handelt es sich um eine Aluminiumfelge, bei welcher in Richtung der Achse Bohrungen 96 für die Speichen erkennbar sind.

Auf der linken Seite von Fig. 6 sind die Permanentmagnetschichten 12,14 in Abstand voneinander angeordnet. Sie sind durch Zwischenstege 98 getrennt, welche beispielsweise aus Weicheisen bestehen. Dadurch kann der elektrische Widerstand optimiert werden.

Zeichnerisch betrachtet entspricht Fig. 7 weitgehend Fig. 5, in beiden Figuren kann die Spuleneinheit 24 beliebig verlängert werden, sie kann sich bis über etwa drei Viertel des entsprechenden Rades erstrecken. Die Wickelrichtung z ist gleichläufig und nicht bezüglich einer oder beider Nachbarspulen gegenläufig wie in Fig. 5. Die Wickelrichtung richtet sich nach dem Einsatz.

In Fig. 7 werden vier eng aneinander liegende Wickelspulen 30, mit oder ohne Spulenkern 34, von je einem aussenliegenden Permanentmagneten 12,14 begrenzt. Ist eine grosse Anzahl von Wickelspulen 30 eng aneinanderliegend angeordnet, können dazwischenliegend immer wieder Permanentmagneten 12,14 angeordnet sein, zweckmässig nach jeweils vier bis zehn Wickelspulen 30, was nicht zeichnerisch dargestellt ist.

Fig. 8 zeigt den äusseren peripheren Bereich eines Rades 10 mit einer peripheren Seitenfläche 11. Auf dieser sind Wickelspulen 30, mit oder ohne Spulenkerne 34, eng aneinanderliegend oder in Abstand zueinander, angeordnet. Die Wickelspulen 30 sind nur schematisch angedeutet, es kann nichts über deren Ausrichtung abgeleitet werden, dies wird in der Praxis optimalisiert.

Im Zusammenwirken können auch Vorrichtungen gemäss Fig. 7 und 8 elektrischen Strom induzieren, welcher zweckmässig über Kupferdrähte 32 des Stators abgeleitet wird.

In Fig. 9 ist eine Trägereinheit, also ein Stator, gezeigt, welcher jedoch keine Wickelspulen, sondern Permanentmagnetschichten 12,14 aufweist. Wie angedeutet, ist die Trägereinheit 22 seitlich nicht begrenzt, sie kann sich entlang der Krümmungslinie K über den ganzen Umfang des Rades 10 (Fig. 8) erstrecken, jedoch auch nur verhältnismässig wenige Permanentmagnetschichten 12,14 aufweisen. In diesem Fall können entlang des Radumfangs zwei oder mehrere Segmente von Trägereinheiten 22 angeordnet sein.

Bei der Kombination von Fig. 8 und 9 muss der induzierte elektrische Strom über den Rotor, also das Rad 10, abgeführt werden.

## Patentansprüche

1. Elektrische Vorrichtung, insbesondere an einem Fahrzeug, welche mechanisch reibungsfrei arbeitet, wenigstens ein mit Permanentmagneten (12,14) und/oder elektrischen Wickelspulen (30) bestücktes Rad (10) als Rotor und auf wenigstens einer Trägereinheit (22) angeordnete elektrische Wickelspulen (30) und/oder Permanentmagneten (12,14) als Stator umfasst, wobei die Permanentmagneten (12,14) und die Wickelspulen (30) bei entsprechender Stellung des Rotors paarweise deckungsgleich angeordnet sind,
**dadurch gekennzeichnet, dass**
in einer Vorrichtung, zur direkten Stromerzeugung und/oder zum Direktantrieb, die Permanentmagneten (12,14) und/oder Wickelspulen (30) entlang einer oder beider im peripheren Bereich ringförmig ausgebildeten Seitenfläche/n (11) wenigstens eines Rades (10) angeordnet sind, und in Abstand zu dieser/diesen Seitenfläche/n (11) je eine Trägereinheit (22) aus einer Trägerplatte (28) mit wenigstens drei dem Krümmungsradius (K) der Seitenfläche (11) des Rades (10) entsprechend längslaufend nebeneinander angeordneten Wickelspulen (30) und/oder Permanentmagneten (12,14) eingebaut ist/sind, wobei bei einer kombinierten elektrischen Stromerzeugungs- und Antriebsvorrichtung eine Umschaltung vorgesehen ist.

2. Vorrichtung nach Anspruch 1, **dadurch gekennzeichnet, dass** eine Stromerzeugungs- und Antriebsvorrichtung eine manuell betätigbare und/oder eine elektronisch gesteuerte Umschaltung aufweist.

3. Vorrichtung nach Anspruch 1 oder 2, **dadurch gekennzeichnet, dass** die Trägereinheit (22) eine magnetisch gut leitende Trägerplatte (28) umfasst.

4. Vorrichtung nach einem der Ansprüche 1 bis 3, **dadurch gekennzeichnet, dass** die Trägereinheiten (22) auswechselbar sind und wahlweise einen mechanisch auf die Seitenflächen (11) des Rades (10) einwirkenden Bremsbelag (36) haben.

5. Vorrichtung nach einem der Ansprüche 1 bis 4, **dadurch gekennzeichnet, dass** nach dem U-Kern-Prinzip nebeneinander angeordneten Wickelspulen (30) ein optimal wechselndes N-S/S-N Magnetfeld von jeder Spule zur/zu den Nachbarspule/n erzeugen.

6. Vorrichtung nach einem der Ansprüche 1 bis 5, **dadurch gekennzeichnet, dass** die Permanentmagneten 12,14 unmittelbar neben einander oder in Abstand von einander mit alternierender oder gleicher Polarität angeordnet sind, auch unter Zwischenlage einer magnetisch gut leitenden Schicht (98), insbesondere aus Weicheisen.

7. Vorrichtung nach einem der Ansprüche 1 bis 6, **dadurch gekennzeichnet, dass** bei auf den Seitenflächen (11) des Rades (10) angeordneten Wickelspulen (30) die den erzeugten elektrischen Strom über getrennte radiale Leiter, insbesondere Speichen, zum Verbraucher führende Radnabe eine Isolation mit wenigstens einem Isolationsring aufweist, welche die linke und die rechte Seite der Radnabe elektrisch trennt.

8. Vorrichtung nach einem der Ansprüche 1 bis 7, **dadurch gekennzeichnet, dass** die Wickelspulen (30) über wenigstens 20 % des Umfangs der Seitenfläche (11) des Rades (10) angebracht sind, insbesondere auf wenigstens 75 %.

9. Vorrichtung nach einem der Ansprüche 1 bis 8, **dadurch gekennzeichnet, dass** die peripheren Seitenflächen (11) des Rades (10) mit Wickelspulen (30) bestückt und auf den Trägerplatten (28) die Permanentmagnete (12,14) teilweise durch Wickelspulen (30) ersetzt sind, wobei die elektrischen Leiter (32) zur Stromabfuhr vorzugsweise mit dem Stator verbunden sind.

10. Verwendung einer Vorrichtung nach einem der Ansprüche 1 bis 9 für vollständig oder ergänzend durch menschliche Muskelkraft, Gravitations- und/oder Bremskraft angetriebene Fahrzeuge und Apparate, wie Fahrräder, Elektrofahrräder oder Elektrotrottinetts, auf dem Fahrradprinzip basierende Hometrainer, Inline-Skatingrollen, Skater-Sticks und Skate-Boardrollen, insbesondere zur Beleuchtung, Speisung von Computern und einen menschliche Muskelkraft unterstützenden Antrieb (66).
